# EUROPEAN PATENT APPLICATION

(11) **EP 3 571 931 A1**
(43) Date of publication of application: **27.11.2019**
(21) Application number: 19176227.7
(22) Date of filing: 23.05.2019
(51) Int. Cl.: A23K 10/30, A23K 20/105, A23K 40/00, A23K 50/30

(54) **PROCESS FOR THE PRODUCTION OF ANIMAL FEED**

(30) Priority: 24.05.2018 NL 2020980; 25.06.2018 NL 2021176
(71) Applicant: Van Gorp, Jacoba Sebastiaan Maria, 5014 DD Tilburg (NL)
(72) Inventor: VAN GORP, Coenraad Johan Maria, 5133 NA RIEL (NL)
(74) Representative: Algemeen Octrooi- en Merkenbureau B.V.

(57) **Abstract**

The present invention relates to a method for making a suspension of cereal, said method comprising the steps of:
- supplying one or more types of cereal, preferably selected from the group consisting of wheat, barley, oats, spelt and maize and one or more combinations thereof;
- comminuting, preferably cracking and/or by means of a horizontal hammer mill, the one or more types of cereals; and
- hydrothermal treating a mixture of water and the comminuted cereals in the presence of sodium bicarbonate to obtain a suspension of the one or more cereals. The invention further relates to a suspension of one or more cereals. The invention further relates to a method for feeding animals.

## Description

Environmental pollution has become an ever greater problem in recent years, partly because the human population on Earth is increasing considerably; this problem can only become greater in the future.

Agriculture is an important factor in environmental pollution, in particular with respect to the greenhouse effect, for which the agricultural sector is responsible for 30%. Making agriculture sustainable is therefore necessary in order to prevent environmental pollution increasing further, or to reduce it. For this, food production has to become more efficient.

This may be achieved *inter alia* by minimizing wastage of minerals and raw materials. An example of this is better and more efficient feeding of farm animals. Not only will less feed be required as a result, but also the manure obtained will contain less minerals (e.g. N (nitrogen in the form of ammonia) and P (phosphorus in the form of phosphate)) and this gives an improvement in the quality of groundwater and surface water.

Another important factor in environmental pollution is the transport of agricultural products, such as feed. This transport-related pollution can be reduced by growing plants locally and making feed locally, so that the cycle of food production can be closed locally. However, this requires improved techniques for converting feed plants, for example maize, wheat and barley, into high-grade animal feed.

Phytic acid (in salt form also called phytate) is a phosphate-containing compound that occurs naturally in plant-based food products, such as whole grain cereals. Phytic acid is found in the outermost layers of cereals and seeds. When phytic acid binds to minerals such as calcium, iron and zinc, insoluble components are formed which cannot be absorbed in the gut of animals and which leave the animal again via manure. As a result, phosphate and useful minerals end up in manure and groundwater, whereas they should be absorbed by the animal. If an animal is to absorb phosphate and minerals, hydrolysis of phytic acid is necessary, wherein phosphate is released via the following reaction mechanism. This reaction is catalysed by the enzyme phytase. Phytase belongs to the group of phosphatases that are able to hydrolyse phytate to a series of lower phosphate esters of (myo-)inositol and phosphate.

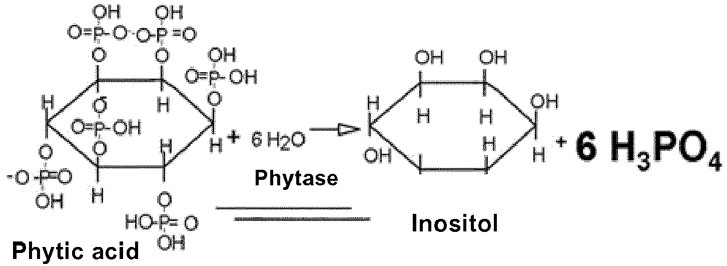

The enzyme phytase occurs in plant-based food that contains phytic acid, but its activity in the digestive system is usually insufficient to convert all the phytic acid present. Ruminants (e.g. cows) produce extra phytase by means of microorganisms that are present in the rumen.

Monogastric animals (such as pigs) produce much less phytase than is necessary for releasing phosphate in the digestive system from phytic acid. When an animal that does not have (enough) phytase receives phytic acid, for example by eating cereals, the phytic acid that is not absorbed will end up in manure. However, when these animals receive additional phytase via their food, they are able to convert the phytic acid. Phytase not only improves phosphorus digestibility, but also has a favourable effect on calcium and amino acid digestibility and on the digestibility of magnesium, sodium, potassium and zinc. Adding phytase to feed is expensive and involves extra steps. Without wishing to be bound to a particular theory, the inventors think that a disadvantage of adding phytase to feed is that conversion in the digestive system is not optimum; the residence time in the animal's stomach is short, the temperature is not optimum for the action of phytase and a large number of other compounds are present that may have an effect on the action of phytase. Furthermore, the phytase added to feed is usually 3-phytase whereas the phytase that occurs naturally in cereal is of a different type, namely 6-phytase, which has a different action. With the process of the present invention, the phytase already present in cereal, 6-phytase, can be activated, which results in a feed that is absorbed better than when 3-phytase is added to the feed.

When the phytase available in the feed is more available for the animals, a smaller amount of artificial phytase and/or phosphate needs to be added to the feed and less phosphate is excreted in the manure. Therefore fewer steps would be required in the production process, and in addition this would reduce the cost. When absorption of the available phosphate by the animals is better, less phosphate needs to be available in the feed, or the animals need to ingest less feed in order to be able to absorb the same amount of phosphate. In addition, less phosphate ends up in manure. Excessive phosphate in manure may end up in the soil and water and thus pollute the environment.

The present invention aims to provide a process for making a high-grade animal feed. A further aim is to provide an animal feed that leads to improved bowel function of the animals to be fed, preferably monogastric animals, especially pigs. One aim of the invention is to close the local cycle of nitrogen (N in the form of ammonia) and phosphorus (P in the form of phosphate) as far as possible. A further aim of the present invention is to provide a method for making animal feed that leads to higher phosphate availability in animal feed. Another aim of the present invention is to provide a method for making animal feed that leads to increased phosphate absorption in animals. Another aim of the present invention is to provide an animal feed with higher phosphate availability. Another aim of the present invention is to provide an animal feed that promotes phosphate absorption in animals. Another aim is to provide a feed that gives pigs such health in intensive stock rearing that it is possible to avoid tail docking, which is not possible at present because in intensive stock rearing it has only appeared possible to dispense with tail docking for pigs with very good health. A further aim is to provide an animal feed that has a taste that is as optimum as possible so that it is appreciated by the animal being fed. A further aim is to provide an animal feed which, through processing, makes a contribution to the wellbeing of the animal to be fed, for example an animal feed with a low content of fungi. A further aim is to provide an animal feed that can be fed to the animal to be fed for a longer period than the animal feeds currently available.

At least one of the aims described above is achieved by the method for making animal feed, i.e. a suspension of cereal, said method comprising the steps of:
- supplying one or more types of cereal, preferably selected from the group consisting of wheat, barley, oats, spelt, rye and maize and one or more combinations thereof;
- comminuting, preferably grinding and optionally - prior to grinding - crushing, the one or more types of cereals; and
- hydrothermal treating a mixture of water and the comminuted cereals in the presence of sodium bicarbonate to obtain a suspension of the one or more cereals. The inventors found, surprisingly, that by adding a composition that comprises sodium bicarbonate to animal feed, the animals need less feed, and less phosphate ends up in the manure.

### Summary

In a first aspect, the present invention relates to a method for making a suspension of cereal, said method comprising the steps of: supplying one or more types of cereal, preferably selected from the group consisting of wheat, barley, oats, spelt, rye and maize and one or more combinations thereof; comminuting, preferably crushing and/or grinding in a horizontal hammer mill, the one or more types of cereals; and hydrothermal treating a mixture of water and the comminuted cereals in the presence of sodium bicarbonate to obtain a suspension of the one or more cereals.

This process has the effect that simple products in the feed can be processed, so that the cost price drops. Furthermore, the feed according to the invention will lead to improved bowel function of the animal to be fed; this is not only favourable for the health of the animal, but the number of kilograms of feed that an animal eats will also decrease, which is favourable for the cost price, but also for the environment. Furthermore, the manure that is excreted by the animal will contain less nitrogen and phosphates, which offers environmental benefits. Another advantage of the method according to the invention is that locally grown food plants can be made accessible locally and can be used as feed locally, so that transport costs and environmental pollution associated with transport can be limited. It was also found that the method can be carried out in a relatively short time (about 30 minutes) which makes it possible to provide the animals with a continuous stream of 'fresh' feed, without having to take into account the time for preparing the animal feed according to the present invention. Furthermore, it was also found that the feed has an excellent taste and a low content of fungi.

Furthermore, in a second aspect, the present invention relates to a feed obtainable by the process according to the first aspect of the present invention. The invention also relates to the use of sodium bicarbonate for improving the action of phytase in "unlocking" phosphate from cereals. In a fourth aspect, the present invention also relates to a manure obtainable by the process according to the first aspect of the present invention.

One or more of the aims of the invention are achieved hereby.

### More detailed description of the invention

Various embodiments of the invention are explained hereunder. These embodiments may also be combined.

### Definitions

The following definitions are used in the present description and the claims. Other terms that are not mentioned below are assumed to have the generally accepted meaning in this technical field.

The term "phytase" means a phosphatase enzyme that catalyses the hydrolysis of phytic acid.

The term "phytic acid" means a material with the molecular formula C₆H₁₈O₂₄P₆ as shown in the following figure. Phytic acid is also called (1R,2S,3r,4R,5S,6s)-cyclohexane-1 ,2,3,4,5,6-hexayl hexakis[dihydrogen (phosphate)], inositol hexakisphosphate or inositol polyphosphate. When in a salt, it is also called phytate. It is a saturated cyclic acid, and is the main storage form of phosphorus in many plant tissues, especially bran and seeds.

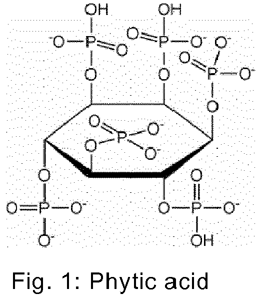

The term "inositol" means a material with the molecular formula C₆H₁₂O₆ as shown in the following figure. Inositol is also called (1R,2R,3S,4S,5S,6S)-1,2,3,4,5,6-hexahydroxy-cyclohexane. The most important isomer in nature is myo-inositol (cis-1,2,3,5-trans-4,6-hexahydrocyclohexane). Inositol is a vitamin-like material that is often included in the vitamin B-complex (as vitamin B8).

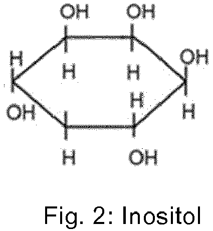

The term "monogastric animals" means animals that have only one stomach. Among others, this includes humans, pigs, goats and sheep, but also poultry and various fish species.

The term "comminution" means the optional breaking and destruction (pulverizing) of the bran of the cereal provided. Depending on the cereal provided, the step of comminution of the cereal comprises crushing the cereal. If cereal that has already been crushed is provided, the term "comminution" according to the present invention may simply comprise the destruction (or grinding) of the bran of the already crushed cereal that is provided. Thus, although not strictly necessary, in such a case the already crushed cereal provided may also undergo a further crushing step.

The term "opening up" means that the cereal is subjected to a hydrothermal treatment; here, the cereal is steeped and pre-cooked.

The term "hydrothermal treatment" means treatment of cereal by contact with water at an elevated temperature.

The term "sodium bicarbonate" also means sodium hydrogen carbonate or baking soda. It is a white crystalline material. As a food additive it has the E number E500(ii).

The term "suspension of one or more cereals" means a suspension of comminuted cereals in water. This is also called a mash or wet mash.

In a first aspect, the present invention relates to a hydrothermal treatment of comminuted cereal in the presence of sodium bicarbonate. The invention relates to a method for making a suspension of cereal, said method comprising the steps of supplying one or more types of cereal; comminution of the one or more types of cereals; and hydrothermal treatment of a mixture of water and the comminuted cereals in the presence of sodium bicarbonate to obtain a suspension of the one or more cereals.

Preferably the cereals (the grains) are subjected to comminution by crushing and/or by means of a horizontal hammer mill. Crushing, also called cracking, may be carried out using a cracking mill (cracker), the cereal provided being broken into smaller fragments. Note that if the cereal provided already comprises crushed (cracked) cereal, the step of cracking of the cereal provided is not strictly necessary and merely optional. The advantage of cracking cereals relative to other comminution techniques, such as grinding and rolling, is that cracking ensures that the cereal is comminuted without the release of heat of friction; heat of friction may cause degradation of the phytase enzyme, which is adverse for the process. Cracking is a process that is now employed for the comminution of malt in the brewing industry. In one embodiment, the cereal is comminuted (preferably cracked) and directly thereafter brought into contact with hot water (and sodium bicarbonate). In other words comminution is carried out at the same location and time (in-line) with the execution of hydrothermal treatment.

In one embodiment the cereal is then also ground in a certain manner in a mill, preferably a cracker or a horizontal hammer mill, or a cracker and a horizontal hammer mill. Preferably this mill is not a regular hammer mill but a horizontal hammer mill, because in a regular hammer mill the temperatures due to friction are too high, which has an adverse effect on the nutritional value of the cereal. A regular hammer mill is vertical and a horizontal hammer mill is horizontal; as a result, small particles fall through directly and therefore do not come into contact with the hammer, so that excessively high temperatures are avoided.

It should be noted that in the context of the present invention, an "excessively high temperature due to friction" means a temperature that is above 20°C. In one embodiment of the present invention, for the step of comminution of the cereal, and in particular fragmentation of the bran, a comminution device (such as a horizontal hammer mill) is selected wherein the temperature rise, as a consequence of the friction during the method, is at most 20°C, preferably at most 15°C, more preferably at most 10°C, and most preferably is at most 5°C. Ideally the comminution device is selected so that the temperature rise, as a consequence of friction, approaches 0°C.

In one embodiment the hydrothermal treatment consists of bringing the comminuted cereal (and sodium bicarbonate) into contact with water having a temperature between 50 and 75°C and stirring for a certain length of time at a temperature between 50 and 70°C. The temperature of the hydrothermal treatment is thus preferably between 55 and 65°C. When the temperature is above 60°C there is a possibility that phytase will be deactivated, which is disadvantageous. Consequently the temperature is selected so that it is close to the maximum temperature of 60°C, for example about 58°C. The starting temperature of the water (optionally with sodium bicarbonate) may be between 50 and 75°C, preferably between 55 and 70°C, for instance between 60 and 65°C because the comminuted cereal causes cooling of the water. In one embodiment the water has a temperature of 59°C.

Regarding the method according to the present invention, it is noted that the application of steps such as fermentation of the cereal provided and allowing the cereal provided to germinate have adverse consequences for the animal feed finally obtained by the method. Thus, it was found that fermentation of the cereal has a very negative effect on the desired taste of the animal feed to be obtained. Furthermore, it is suspected that fermentation has an adverse effect on the amount of available phytic acid in the mixture. It is assumed that phytic acid will be decomposed to an inactive component during fermentation.

Regarding allowing the cereal to germinate, it was found that with germination of the cereal, the growth of undesirable fungi in the animal feed to be obtained is stimulated, which has an adverse effect on the wellbeing of the animals and the shelf life of the animal feed.

In view of the foregoing, the present invention consequently relates to a method for making a suspension of cereal, said method comprising the steps of:
- supplying one or more types of cereal, preferably selected from the group consisting of wheat, barley, oats, spelt, rye and maize and one or more combinations thereof;
- comminuting, preferably grinding and optionally - prior to grinding - cracking, the one or more types of cereals; and
- hydrothermal treating a mixture of water and the comminuted cereals in the presence of sodium bicarbonate to obtain a suspension of the one or more cereals.

The present invention further relates to a method for making a suspension of cereal, said method comprising the steps of:
- supplying one or more types of cereal, preferably selected from the group consisting of wheat, barley, oats, spelt, rye and maize and one or more combinations thereof;
- comminuting, preferably grinding and optionally - prior to grinding - cracking, the one or more types of cereals; and
- hydrothermal treating a mixture of water and the comminuted cereals in the presence of sodium bicarbonate to obtain a suspension of the one or more cereals,
with the proviso that the method does not comprise any steps of:
- fermenting the one or more types of cereals; and/or
- allowing the one or more types of cereals to germinate.

In other words, the method of the present invention relates to a method for making a suspension of cereal, wherein the method does not have the steps of:
- fermenting the one or more types of cereals; and/or
- allowing the one or more types of cereals to germinate.

In one embodiment the mixture is stirred to maintain the reaction and to allow the phytase to act upon the phytic acid present. Although the mixture can already be fed after 30 minutes, it is preferable to stir for a period of at least 1 hour, preferably at least 4 hours, in particular at least 12 hours. A soaking time between 12 and 24 hours, such as between 16 and 20 hours ensures good mash formation, a homogeneous mash that does not separate, and a more digestible animal feed is obtained. A disadvantage of separation of the mash is that two phases are formed, a solid phase of high nutritional value and an aqueous upper phase of less nutritional value; the animals will in particular drink/eat the aqueous upper fraction and thus leave behind the thicker mash with higher nutritional value.

In one embodiment, water having a temperature between 50 and 75°C is premixed with sodium bicarbonate before the comminuted cereals are added. Thus, in this embodiment, in a first step hot water is mixed with sodium bicarbonate and optionally pre-stirred, and simultaneously, cereals are provided and comminuted separately. Then the comminuted cereals are added to the solution of sodium bicarbonate in hot water.

In one embodiment, the mixture of water, sodium bicarbonate and the comminuted cereals is stirred during hydrothermal treatment at a speed between 0.3 and 3 revolutions per second. Stirring is preferably carried out with a blade mixer.

In one embodiment of the invention, the method comprises the following steps (which do not have to be carried out in this order and which may also partially be carried out simultaneously):
* comminuting the cereal, preferably by means of a cracker or a combination of a cracker and a horizontal hammer mill. Several comminution steps may be carried out, for example several passages through either a cracker, a horizontal hammer mill or a combination thereof.
* mixing the sodium bicarbonate with (some of) the water to form an aqueous solution; preferably the sodium bicarbonate is dissolved and an amount of between 1 and 50 litres, such as between 5 and 20 litres, such as 10 litres; optionally the temperature of the water is between 50 and 75°C;
* optionally adding additional water (if the sodium bicarbonate is added to some of the water) having a temperature between 50 and 75°C;
* hydrothermal treating the comminuted material, the sodium bicarbonate with the aqueous solution to form a mixture.

In one embodiment the pH of the mixture during hydrothermal treatment is maintained at between 3 and 5. This has a positive effect on the action of phytase in the conversion of phytic acid/phytate to phosphate and inositol.

In one embodiment the one or more cereals together form between 15 and 35 wt% of the mixture, based on the total weight of the mixture of water, sodium bicarbonate and one or more cereals. In other words, the ratio of cereals to water is between 1:2 and 1:6, such as between 1:3 and 1:4.

In one embodiment, sodium bicarbonate is present in an amount of between 0.005 and 0.050 wt%, preferably between 0.010 and 0.030 wt% based on the dry weight of the one or more cereals. In one embodiment sodium bicarbonate is present in an amount of between 0.001 and 0.010 wt%, preferably between 0.002 and 0.006 wt% based on the total mixture. In one embodiment, between 0.5 and 2.0 kg of sodium bicarbonate is used per day for a dry weight of cereal of between 5000 and 20 000 kg. In a specific embodiment, approx. 1 kg of sodium bicarbonate is used per day for a dry weight of cereal of approx. 10 thousand kilograms. The dry weight of the one or more cereals is the total weight of the one or more cereals minus the water content thereof. Cereals with a water content of e.g. 12 wt% give a dry weight of 88 wt%.

In one embodiment, barley and wheat are added in a weight ratio to each other of 0.8:1.2-1.2:0.8, preferably 1:1. In other words, preferably as much barley as wheat is added. In one embodiment, maize is added in an amount of 5-10 wt% based on the total weight of the one or more cereals. In one embodiment, the one or more cereals consist of 5-10 wt% maize, 45-50 wt% barley and 45-50 wt% wheat based on the total weight of maize, barley and wheat, wherein the combination of maize, barley and wheat comes to 100 wt%. In one embodiment, between 0.5 and 3 wt% of oats is added, such as between 0.75 and 1.5 wt% of oats. In one embodiment, between 0.5 and 3 wt% of spelt is added, such as between 0.75 and 1.5 wt% of spelt. In one embodiment, between 1 and 3 wt% of a combination of oats and spelt is added, such as 1.5 wt% of a mixture of oats and spelt. Preferably this mixture of oats and spelt has an amount of from 40 to 60% of oats and an amount of from 40 to 60% of spelt based on the weight of the mixture, such as 50% oats and 50% spelt.

In one embodiment, the method comprises the following steps:
- supplying wheat, barley and maize and optionally oats and optionally spelt;
- comminuting, for example by cracking and by means of a horizontal hammer mill or by cracking alone, the wheat, barley and maize and optionally oats and optionally spelt;
- premixing of water having a temperature between 50 and 75°C with sodium bicarbonate;
- bringing the cracked wheat, barley and maize and optionally oats and optionally spelt into contact with sodium bicarbonate and water having a temperature between 50 and 75°C to obtain a mixture;
- stirring the mixture for a period of at least 12 hours at a temperature between 50 and 60°C to obtain a suspension of cereals.

In another aspect, the invention relates to a suspension of one or more cereals, obtained or obtainable according to the aforementioned method of the invention. The invention thus relates to a mash, in particular an animal feed mash. In one embodiment the suspension is for application in an animal feed, preferably for monogastric animals, especially pigs.

In another aspect, the invention relates to a method for feeding animals, preferably pigs, wherein the suspension according to the invention is mixed with one or more feed components to form a mixed feed and it is fed to the animals at a temperature between 30 and 45°C. In one embodiment the animal feed comprises between 60 and 80 wt% of the suspension according to the invention. Furthermore, usual components such as vitamins, amino acids, starch-containing components and protein-containing components are added.

In one embodiment the feed is fed warm to animals, such as pigs, such as sows, or also to young animals, such as piglets. "Warm" means a temperature from 30 to 45°C. The advantage of supplying the feed warm is that less feed is then required. If feed is supplied "cold", a pig will consume extra feed to heat the feed to body temperature; this can be prevented by supplying warm feed.

In one embodiment, after making the warm suspension, it is stored at a temperature between 30 and 45°C with stirring, preferably with exclusion of air, until it is fed to the animals. In one embodiment the mixture is mixed for a number of minutes, such as between 1 and 10 minutes in a mixing device and then transferred to a separate tank, such as a silo, which is heated and stirred. The hydrothermal treatment will be carried out in this separate tank. It is also possible for the stirring of the mixture and the hydrothermal treatment to be carried out in the same tank/container. In one embodiment the warm suspension is stored in a separate tank, which is heated; this may also be the same tank as that in which the hydrothermal treatment is carried out. In one embodiment the warm suspension is stored with exclusion of oxygen from the air. In one embodiment the tank containing the suspension is emptied into a mixing or metering system and rinsed without ingress of oxygen. In one embodiment, the wash water used for rinsing is also fed to the animals.

In another aspect, the invention relates to the application of sodium bicarbonate in animal feed for improving the absorption of phosphate in animals and/or for releasing phosphate from phytic acid in one or more cereals and/or for improving the absorption of vitamin D in the intestines of animals. It should be clear that sodium bicarbonate is and will be present in the feed.

In one embodiment, the one or more cereals are comminuted to comminuted cereals, wherein between 1 and 3 wt% of the comminuted cereals have a grain size larger than 2 mm. This is measured by sieving the comminuted cereal with a sieve with a mesh size of 2 mm. Then the part of the comminuted cereal that passes through this sieve is sieved again on a sieve with a mesh size of 1 mm. Between 25 and 50 wt% of the comminuted cereals have a grain size greater than 1 and less than or equal to 2 mm.

Then the part of the comminuted cereal that passes through this sieve is sieved again on a sieve with a mesh size of 0.5 mm. Between 20 and 35 wt% of the comminuted cereals have a grain size larger than 0.5 and less than or equal to 1 mm.

Then the part of the comminuted cereal that passes through this sieve is sieved again on a sieve with a mesh size of 1 mm and then 0.5 mm. A small part will fall through the smallest sieve. In one embodiment, at least 80 wt% of the comminuted cereal has a grain size of less than 1 mm. In particular, the distribution is as follows:

| | **>1 mm** | **> 0.5 mm and ≤ 1 mm** | **sum under 1 mm** |
|---|---|---|---|
| mixture of cereals | <20 wt% | ≤ 25 wt% | ≥ 80 wt% |

Sodium bicarbonate also promotes the absorption of vitamin D in the gut and because vitamin D controls the absorption of phosphate from the gut, sodium bicarbonate not only ensures improved release of phosphate from cereals but also better absorption of this phosphate in the animal.

In another aspect, the invention relates to manure obtained or obtainable by the application of a suspension of one or more cereals according to the present invention. The invention thus relates to manure obtained or obtainable through the application of a mash, in particular an animal feed mash, preferably manure produced by monogastric animals, such as pigs.

It was found that the manure obtained or obtainable by the application of the suspension according to the present invention has especially improving properties. The manure obtained has increased separability (it is easy to separate the thin fraction from the thick fraction), which makes it possible to apply a continuous process, in which freshly obtained manure is supplied directly to manure separators (such as the screw presses from KeyDollar). Because the thin fraction of the manure according to the present invention has a structure that almost corresponds to water, the thin fraction is preferably evaporated. A further improvement in separation of the manure may be obtained by adding a polymer, such as organic flocculants (for example polyacrylamide).

It was also found that the manure according to the present invention leads to a significant reduction of odour (stench). Moreover, it was found that the manure according to the present invention comprises a reduced thick fraction compared to the manure that is obtained as standard without application of the suspension of one or more cereals according to the present invention.

The manure according to the present invention comprises low concentrations of phosphates, nitrogen and/or potassium. Manure produced by monogastric animals, such as pigs, without application of the suspension of one or more cereals according to the present invention typically comprises a phosphate content between 3 and 4 grams per kg of manure, a nitrogen content between 3 and 5 grams per kg of manure and a potassium content of about 2 grams per kg of manure.

The manure according to the present invention comprises a phosphate content of at most 2 grams per kg of manure, preferably a phosphate content of at most 1.5 grams per kg of manure, more preferably a phosphate content of at most 1.0 grams per kg of manure. In particular, the manure according to the present invention comprises a phosphate content of about 0.5 grams per kg of manure.

The manure according to the present invention comprises a nitrogen content of at most 2.5 grams per kg of manure, preferably a nitrogen content of at most 2.0 grams per kg of manure, more preferably a nitrogen content of about 1.85 grams per kg of manure.

The manure according to the present invention comprises a potassium content of at most 1.75 grams per kg of manure, preferably a potassium content of at most 1.5 grams per kg of manure, more preferably a potassium content of at most 1.25 grams per kg of manure.

### Examples

The invention will be explained in more detail hereunder with examples, which are illustrative and not in any way limiting.

In order to compare the effect of the feed prepared according to the method according to the invention with traditional feed, pigs fed for 6 months with traditional feed (purchased dry mixed feed that is formed into a cold mash with 3 parts cold water (8-10°C) to one part of mixed feed) and pigs fed for 6 months with feed prepared according to the method according to the invention were compared, as explained below.

It was found that the feed contains less phosphate than standard feed, which therefore leads to a lower content of phosphate in the manure. It was also found that the phosphate is absorbed better by the pigs, and less phosphate ends up in the manure. This is a positive effect of the invention.

The procedure carried out in an example according to the invention is as follows:
A clean mixing tank is filled with approx. 4600-4800 litres of water with a temperature of approx. 64°C. A solution of 2 litres of water with 200 g sodium bicarbonate is added. Then 826 kg of cracked barley and 817 kg of cracked wheat and 145 kg of cracked maize and 27 kg of a cracked mixture of 50% oats and 50% spelt are added to this solution. This mixture is stirred for three minutes and then transferred to a heated tank, where it is steeped for 14 hours with stirring, with a stirring speed of 1 revolution per second at a temperature of 58°C and a pH between 2.5 and 3.5. The hot suspension obtained is stored air-tight in the tank until it is fed to the animals.

The pH of the mixed feed after mixing with one or more feed components is between 4 and 5, preferably between 4.3 and 4.7, such as 4.5. This depends on the composition of the mixed feed.

After eating mixed feed comprising the suspension according to the invention, the animals are in good health and do not have any bone fractures, which might occur through deficiency of vitamin D3. Thus, the suspension according to the invention meets the nutritional requirements of the animals.

One or more of the aforesaid aims are achieved by the invention, as shown in the claims presented hereunder.

## Claims

1. Method for making a suspension of cereal, said method comprising the steps of:
- supplying one or more types of cereal, preferably selected from the group consisting of wheat, barley, oats, spelt, rye and maize and one or more combinations thereof;
- comminuting, preferably cracking and/or by means of a horizontal hammer mill, the one or more types of cereals; and
- hydrothermal treating a mixture of water and the comminuted cereals in the presence of sodium bicarbonate to obtain a suspension of the one or more cereals.

2. Method according to Claim 1, wherein the hydrothermal treatment consists of bringing the comminuted cereal into contact with water having a temperature between 50 and 75°C and stirring for a certain length of time at a temperature between 50 and 60°C.

3. Method according to Claim 2, wherein stirring is carried out for a period of at least 1 hour, preferably at least 4 hours, in particular at least 12 hours.

4. Method according to one or more of the preceding claims, wherein water having a temperature between 50 and 75°C is premixed with sodium bicarbonate before the comminuted cereals are added.

5. Method according to one or more of the preceding claims, wherein the mixture of water, sodium bicarbonate and the comminuted cereals is stirred during the hydrothermal treatment at a speed between 0.3 and 3 revolutions per second.

6. Method according to one or more of the preceding claims, wherein the pH of the mixture is maintained at between 3 and 5 during the hydrothermal treatment.

7. Method according to one or more of the preceding claims, wherein the one or more cereals together form between 15 and 35 wt% of the mixture, based on the total weight of the mixture of water, sodium bicarbonate and one or more cereals.

8. Method according to one or more of the preceding claims, wherein sodium bicarbonate is present at between 0.005 and 0.050 wt%, preferably 0.010 and 0.030 wt% based on the dry weight of the one or more cereals.

9. Method according to one or more of the preceding claims, wherein barley and wheat are added in a ratio of 0.8:1.2-1.2:0.8, preferably 1:1.

10. Method according to one or more of the preceding claims, wherein maize is added in an amount of 5-10 wt% based on the total weight of the one or more cereals.

11. Method according to one or more of the preceding claims, wherein heated water with the composition that comprises sodium bicarbonate is mixed for 5-30 minutes.

12. Suspension of one or more cereals, obtained or obtainable according to one or more of the preceding claims.

13. Suspension according to Claim 12, wherein the suspension is for application in an animal feed, preferably for monogastric animals, especially pigs.

14. Method for feeding animals, preferably pigs, wherein the suspension according to Claim 12 or 13 is mixed to form a mixed feed and is fed to the animals at a temperature between 30 and 45°C.

15. Method according to Claim 14, wherein the suspension, after being made at a temperature between 30 and 45°C, is stored with stirring, preferably with exclusion of air, until it is fed to the animals.
